# EUROPEAN PATENT APPLICATION

(11) **EP 4 756 792 A1**
(43) Date of publication of application: **10.06.2026**
(21) Application number: 23953145.2
(22) Date of filing: 18.09.2023
(51) Int. Cl.: G10L 15/16, G10L 15/04, G10L 15/26, G10L 15/22, G10L 15/18, G06F 3/16, G10L 15/30, H04N 21/422

(54) **ARTIFICIAL INTELLIGENCE DEVICE AND OPERATION METHOD THEREOF**

(71) Applicant: LG Electronics Inc., Yeongdeungpo-gu Seoul 07336 (KR)
(72) Inventor: DO, Ji Won, Seoul 06772 (KR); CHOI, Kwang Soo, Seoul 06772 (KR); CHOI, Go Woon, Seoul 06772 (KR); LEE, Yu Ri, Seoul 06772 (KR)
(74) Representative: Vossius & Partner Patentanwälte Rechtsanwälte mbB
(86) International application number: PCT/KR2023/014045
(87) International publication number: WO 2025/063320

(57) **Abstract**

An artificial intelligence device according to an embodiment of the present disclosure includes: a communication unit that communicates with an electronic device and one or more generative Artificial Intelligence (AI) servers; and a processor that receives a voice command uttered by a user from the electronic device, obtains an analysis result of the received voice command, generates a prompt based on the analysis result when it is determined that a response from the one or more generative Al servers is needed based on the obtained analysis result, transmits the generated prompt to the one or more generative Al servers, receives a response result corresponding to the prompt from the one or more generative Al servers, and transmits the analysis result and the response result to the electronic device.

## Description

### [Technical Field]

The present disclosure relates to an artificial intelligence device, and more particularly, to an artificial intelligence device capable of generating images matching a user's utterance.

### [Background Art]

Digital TV services using wired or wireless communication networks are becoming widespread. Digital TV services can provide various services that could not be provided by existing analog broadcasting services.

For example, IPTV (Internet Protocol Television) and smart TV services, which are types of digital TV services, provide interactivity that allows users to actively select the type of viewing program, viewing time, etc. IPTV and smart TV services can also provide various additional services based on this interactivity, such as internet search, home shopping, online games, etc.

Recently, TVs have been providing voice recognition services through analysis of voice commands uttered by users.

Conventionally, during voice recognition, only the voice recognition result provided from one most suitable Al server is displayed.

However, there is a problem that the voice recognition result may not match the intention of the voice uttered by the user.

### [Disclosure]

### [Technical Problem]

An object of the present disclosure is to provide both the response result of a server operated by the manufacturer of the display device and the response result of an external Al server when providing information matching the user's utterance intention.

An object of the present disclosure is to provide various services to users by combining response results from external generative Al servers for voice commands uttered by users.

### [Technical Solution]

An artificial intelligence device according to an embodiment of the present disclosure includes: a communication unit that communicates with an electronic device and one or more generative Artificial Intelligence (AI) servers; and a processor that receives a voice command uttered by a user from the electronic device, obtains an analysis result of the received voice command, generates a prompt based on the analysis result when it is determined that a response from the one or more generative Al servers is needed based on the obtained analysis result, transmits the generated prompt to the one or more generative Al servers, receives a response result corresponding to the prompt from the one or more generative Al servers, and transmits the analysis result and the response result to the electronic device.

A method of operating an artificial intelligence device according to an embodiment of the present disclosure includes: receiving a voice command uttered by a user from an electronic device; obtaining an analysis result of the received voice command; generating a prompt based on the analysis result when it is determined that a response from one or more generative Al servers is needed based on the obtained analysis result; transmitting the generated prompt to the one or more generative Al servers; receiving a response result corresponding to the prompt from the one or more generative Al servers; and transmitting the analysis result and the response result to the electronic device.

### [Advantageous Effect]

According to an embodiment of the present disclosure, an NLP service of the manufacturer of the display device and an external server service providing information received from external generative Al can be utilized together according to the user's utterance intention. Accordingly, user experience can be improved as various response results matching the user's utterance intention are provided.

### [Description of Drawings]

FIG. 1 is a block diagram illustrating a configuration of a display device according to an embodiment of the present invention.
FIG. 2 is a block diagram of a remote control device according to an embodiment of the present invention.
FIG. 3 illustrates an actual configuration example of a remote control device according to an embodiment of the present invention.
FIG. 4 illustrates an example of utilizing a remote control device according to an embodiment of the present invention.
FIG. 5 illustrates an artificial intelligence (AI) server according to an embodiment of the present disclosure.
FIG. 6 is a ladder diagram for explaining an operation method of an Al system according to an embodiment of the present disclosure.
FIG. 7a is a diagram explaining a process of providing an analysis result of an Al server based on a user's voice command according to the prior art.
FIGS. 7b to 7d are diagrams explaining a process of providing an analysis result of an Al server and a first response result of a first generative Al server based on a user's voice command according to an embodiment of the present disclosure.
FIG. 8 is a ladder diagram for explaining an operation method of an Al system according to another embodiment of the present disclosure.
FIG. 9 is a diagram explaining a process of providing an analysis result of an Al server and first and second response results provided from first and second generative Al servers, respectively, based on a user's voice command according to an embodiment of the present disclosure.
FIG. 10 is a ladder diagram for explaining an operation method of an Al system according to another embodiment of the present disclosure.
FIGS. 11a to 11c are diagrams explaining a process of providing a response result of another generative Al when a response result of another generative Al is needed according to an embodiment of the present disclosure.

### [Best Mode]

Hereinafter, embodiments relating to the present disclosure will be described in detail with reference to the accompanying drawings. The suffixes "module" and "unit" for components used in the description below are assigned or mixed in consideration of easiness in writing the specification and do not have distinctive meanings or roles by themselves.

A display device according to an embodiment of the present disclosure is an intelligent display device that adds a computer-assisted function to, for example, a broadcast reception function, and while remaining faithful to the broadcast reception function, adds an Internet function or the like and may have a more convenient interface such as a manual input device, a touch screen, or a space remote control. In addition, with the support of wired or wireless Internet functions, it is possible to connect to the Internet and a computer, and perform functions such as email, web browsing, banking, or games. A standardized general-purpose OS may be used for these various functions.

Accordingly, the display device described in the present disclosure may perform various user-friendly functions, for example, since various applications may be freely added or deleted on a general-purpose OS kernel. More specifically, the display device may be, for example, a network TV, an HBBTV, a smart TV, an LED TV, an OLED TV, or the like and in some cases, may also be applied to a smartphone.

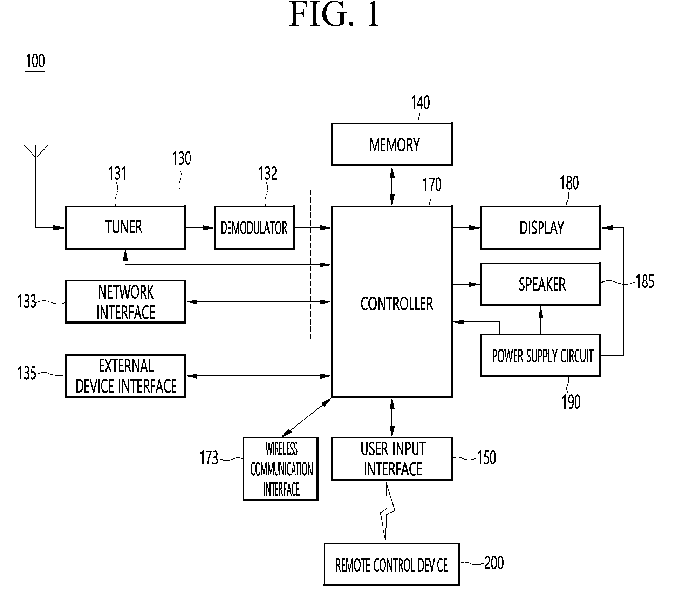

FIG. 1 is a block diagram illustrating a configuration of a display device according to an embodiment of the present disclosure.

Referring to FIG. 1, a display device 100 may include a broadcast reception part 130, an external device interface 135, a memory 140, a user input interface 150, a controller 170, a wireless communication interface 173, a display 180, a speaker 185, and a power supply circuit 190.

The broadcast reception part 130 may include a tuner 131, a demodulator 132, and a network interface 133.

The tuner 131 may select a specific broadcast channel according to a channel selection command. The tuner 131 may receive broadcast signals for the selected specific broadcast channel.

The demodulator 132 may divide the received broadcast signals into image signals, audio signals, and broadcast program-related data signals, and may restore the divided image signals, audio signals, and data signals into an output available form.

The external device interface 135 may receive an application or an application list in an adjacent external device and deliver the application or the application list to the controller 170 or the memory 140.

The external device interface 135 may provide a connection path between the display device 100 and an external device. The external device interface 135 may receive at least one of an image or audio outputted from an external device that is wirelessly or wiredly connected to the display device 100 and deliver the received image or the audio to the controller. The external device interface 135 may include a plurality of external input terminals. The plurality of external input terminals may include an RGB terminal, at least one High Definition Multimedia Interface (HDMI) terminal, and a component terminal.

An image signal of an external device inputted through the external device interface 135 may be outputted through the display 180. A sound signal of an external device inputted through the external device interface 135 may be outputted through the speaker 185.

An external device connectable to the external device interface 135 may be one of a set-top box, a Blu-ray player, a DVD player, a game console, a sound bar, a smartphone, a PC, a USB Memory, and a home theater system but this is just exemplary.

The network interface 133 may provide an interface for connecting the display device 100 to a wired/wireless network comprising internet network. The network interface 133 may transmit or receive data to or from another user or another electronic device through an accessed network or another network linked to the accessed network.

Additionally, some content data stored in the display device 100 may be transmitted to a user or an electronic device, which is selected from other users or other electronic devices pre-registered in the display device 100.

The network interface 133 may access a predetermined webpage through an accessed network or another network linked to the accessed network. In other words, the network interface 133 may transmit or receive data to or from a corresponding server by accessing a predetermined webpage through the network.

The network interface 133 may receive content or data provided from a content provider or a network operator. In other words, the network interface 133 may receive content, such as movies, advertisements, games, VODs, and broadcast signals, which are provided from the content provider or the network operator, and information relating thereto through the network.

In addition, the network interface 133 may receive firmware update information and update files provided from the network operator, and may transmit data to the Internet or content provider or the network operator.

The network interface 133 may select and receive a desired application among applications open to the air, through network.

The memory 140 may store signal-processed image, voice, or data signals stored by a program in order for each signal processing and control in the controller 170.

In addition, the memory 140 may perform a function for temporarily storing image, voice, or data signals output from the external device interface 135 or the network interface 133, and may store information on a predetermined image through a channel memory function.

The memory 140 may store an application or an application list input from the external device interface 135 or the network interface 133.

The display device 100 may play content files (e.g., video files, still image files, music files, document files, application files, etc.) stored in the memory 140, and may provide the content files to a user.

The user input interface 150 may transmit signals input by a user to the controller 170, or may transmit signals from the controller 170 to a user. For example, the user input interface 150 may receive or process control signals such as power on/off, channel selection, and screen setting from the remote control device 200 or transmit control signals from the controller 170 to the remote control device 200 according to various communication methods such as Bluetooth, Ultra Wideband (WB), ZigBee, Radio Frequency (RF), and IR communication methods.

In addition, the user input interface 150 may transmit, to the controller 170, control signals input from local keys (not illustrated) such as a power key, a channel key, a volume key, and a setting key.

Image signals that are image-processed by the controller 170 may be input to the display 180 and displayed as images corresponding to the image signals. In addition, image signals that are image-processed by the controller 170 may be input to an external output device through the external device interface 135.

Voice signals processed by the controller 170 may be output to the speaker 185. In addition, voice signals processed by the controller 170 may be input to the external output device through the external device interface 135.

Additionally, the controller 170 may control overall operations of the display device 100.

In addition, the controller 170 may control the display device 100 by a user command or an internal program input through the user input interface 150, and may access the network to download a desired application or application list into the display device 100.

The controller 170 may output channel information selected by a user together with the processed image or voice signals through the display 180 or the speaker 185.

In addition, the controller 170 may output image signals or voice signals of an external device such as a camera or a camcorder, which are input through the external device interface 135, through the display 180 or the speaker 185, according to an external device image playback command received through the user input interface 150.

Moreover, the controller 170 may control the display 180 to display images, and may control the display 180 to display broadcast images input through the tuner 131, external input images input through the external device interface 135, images input through the network interface, or images stored in the memory 140. In this case, an image displayed on the display 180 may be a still image or video and also may be a 2D image or a 3D image.

Additionally, the controller 170 may play content stored in the display device 100, received broadcast content, and external input content input from the outside, and the content may be in various formats such as broadcast images, external input images, audio files, still images, accessed web screens, and document files.

Moreover, the wireless communication interface 173 may perform wired or wireless communication with an external device. The wireless communication interface 173 may perform short-range communication with an external device. For this, the wireless communication interface 173 may support short-range communication by using at least one of Bluetooth^{™}, Bluetooth Low Energy (BLE), Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (USB) technologies. The wireless communication interface 173 may support wireless communication between the display device 100 and a wireless communication system, between the display device 100 and another display device 100, or between networks including the display device 100 and another display device 100 (or an external server) through wireless area networks. The wireless area networks may be wireless personal area networks.

Herein, the other display device 100 may be a mobile terminal such as a wearable device (for example, a smart watch, a smart glass, and a head mounted display (HMD)) or a smartphone, which is capable of exchanging data (or inter-working) with the display device 100. The wireless communication interface 173 may detect (or recognize) a wearable device capable of communication around the display device 100.

Furthermore, if the detected wearable device is a device authenticated to communicate with the display device 100, the controller 170 may transmit at least part of data processed in the display device 100 to the wearable device through the wireless communication interface 173. Therefore, a user of the wearable device may use the data processed by the display device 100 through the wearable device.

The display 180 may convert image signals, data signals, or on-screen display (OSD) signals, which are processed in the controller 170, or images signals or data signals, which are received in the external device interface 135, into R, G, and B signals to generate driving signals.

Furthermore, the display device 100 illustrated in Fig. 1 is just one embodiment of the present disclosure and thus, some of the components illustrated may be integrated, added, or omitted according to the specification of the actually implemented display device 100.

In other words, if necessary, two or more components may be integrated into one component, or one component may be divided into two or more components. Additionally, a function performed by each block is to describe an embodiment of the present disclosure and its specific operation or device does not limit the scope of the present disclosure.

According to another embodiment of the present disclosure, unlike Fig. 1, the display device 100 may receive images through the network interface 133 or the external device interface 135 and play them without including the tuner 131 and the demodulator 132.

For example, the display device 100 may be divided into an image processing device such as a set-top box for receiving broadcast signals or contents according to various network services and a content playback device for playing content input from the image processing device.

In this case, an operating method of a display device according to an embodiment of the present disclosure described below may be performed by one of the display device described with reference to Fig. 1, an image processing device such as the separated set-top box, and a content playback device including the display 180 and the speaker 185.

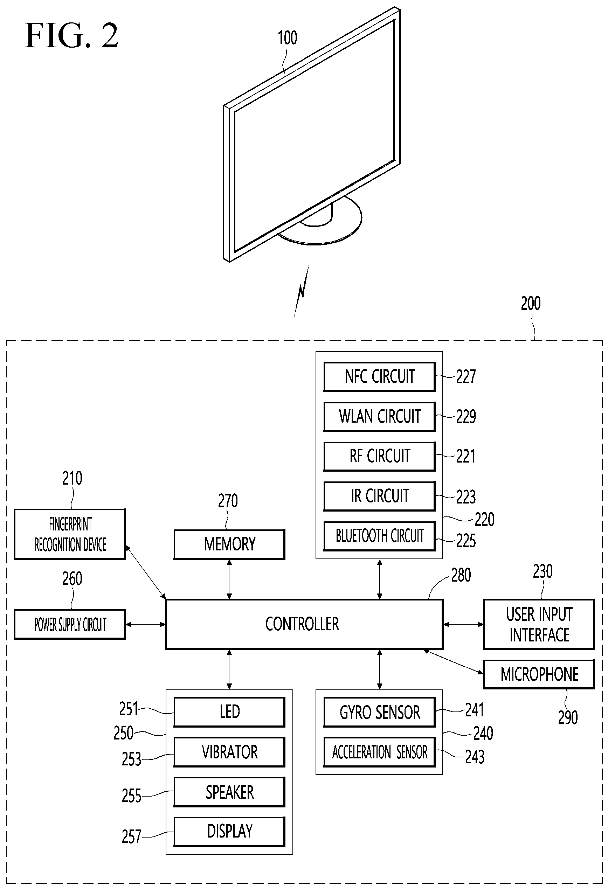

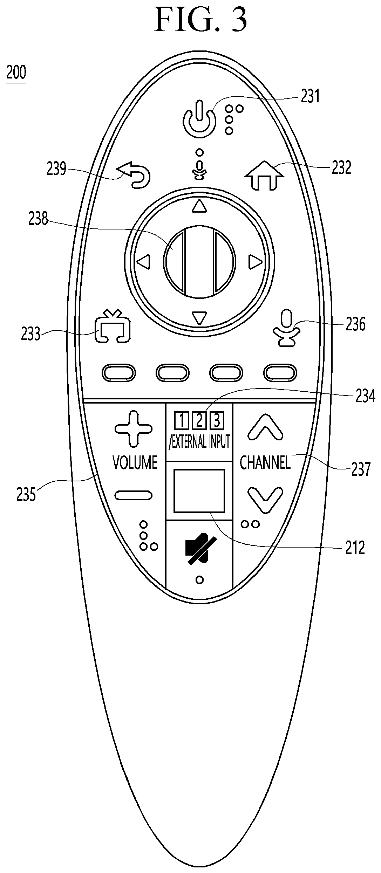

A remote control device according to an embodiment of the present disclosure will be described with reference to Figs. 2 and 3.

Fig. 2 is a block diagram illustrating a remote control device according to an embodiment of the present disclosure and Fig. 3 is a view illustrating an actual configuration of a remote control device according to an embodiment of the present disclosure.

First, referring to Fig. 2, a remote control device 200 may include a fingerprint recognition device 210, a wireless communication interface 220, a user input interface 230, a sensor 240, an output interface 250, a power supply circuit 260, a memory 270, a controller 280, and a microphone 290.

Referring to Fig. 2, the wireless communication interface 220 transmits/receives signals to/from an arbitrary any one of display devices according to the above-mentioned embodiments of the present disclosure.

The remote control device 200 may include a radio frequency (RF) circuit 221 capable of transmitting or receiving signals to or from the display device 100 according to an RF communication standard, and an IR circuit 223 capable of transmitting or receiving signals to or from the display device 100 according to an IR communication standard. In addition, the remote control device 200 may include a Bluetooth circuit 225 capable of transmitting or receiving signals to or from the display device 100 according to a Bluetooth communication standard. In addition, the remote control device 200 may include an NFC circuit 227 capable of transmitting or receiving signals to or from the display device 100 according to an NFC communication standard, and a wireless LAN (WLAN) circuit 229 capable of transmitting or receiving signals to or from the display device 100 according to a WLAN communication standard.

In addition, the remote control device 200 may transmit signals containing information on the movement of the remote control device 200 to the display device 100 through the wireless communication interface 220.

Moreover, the remote control device 200 may receive signals transmitted from the display device 100 through the RF circuit 221 and if necessary, may transmit a command for power on/off, channel change, and volume change to the display device 100 through the IR circuit 223.

The user input interface 230 may be configured with a keypad, a button, a touch pad, or a touch screen. A user may operate the user input interface 230 to input a command relating to the display device 100 to the remote control device 200. If the user input interface 230 includes a hard key button, a user may input a command relating to the display device 100 to the remote control device 200 through the push operation of the hard key button. This will be described with reference to Fig. 3.

Referring to Fig. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back button 239.

The fingerprint recognition button 212 may be a button for recognizing a user's fingerprint. According to an embodiment of the present disclosure, the fingerprint recognition button 212 may perform a push operation and receive a push operation and a fingerprint recognition operation.

The power button 231 may be a button for turning on/off the power of the display device 100.

The home button 232 may be a button for moving to the home screen of the display device 100.

The live button 233 may be a button for displaying live broadcast programs.

The external input button 234 may be a button for receiving an external input connected to the display device 100.

The volume control button 235 may be a button for controlling a volume output from the display device 100.

The voice recognition button 236 may be a button for receiving user's voice and recognizing the received voice.

The channel change button 237 may be a button for receiving broadcast signals of a specific broadcast channel.

The OK button 238 may be a button for selecting a specific function, and the back button 239 may be a button for returning to a previous screen.

Fig. 2 is described again.

If the user input interface 230 includes a touch screen, a user may touch a soft key of the touch screen to input a command relating to the display device 100 to the remote control device 200. In addition, the user input interface 230 may include various kinds of input interfaces operable by a user, for example, a scroll key and a jog key, and this embodiment does not limit the scope of the present disclosure.

The sensor 240 may include a gyro sensor 241 or an acceleration sensor 243. The gyro sensor 241 may sense information on the movement of the remote control device 200.

For example, the gyro sensor 241 may sense information on an operation of the remote control device 200 on the basis of x, y, and z axes and the acceleration sensor 243 may sense information on a movement speed of the remote control device 200. Moreover, the remote control device 200 may further include a distance measurement sensor that senses a distance with respect to the display 180 of the display device 100.

The output interface 250 may output image or voice signals in response to the operation of the user input interface 230, or may output image or voice signals corresponding to signals transmitted from the display device 100.

A user may recognize whether the user input interface 230 is operated or the display device 100 is controlled through the output interface 250.

For example, the output interface 250 may include an LED 251 for flashing, a vibrator 253 for generating vibration, a speaker 255 for outputting sound, or a display 257 for outputting an image, if the user input interface 230 is manipulated or signals are transmitted/received to/from the display device 100 through the wireless communication interface 220.

Additionally, the power supply circuit 260 supplies power to the remote control device 200 and if the remote control device 200 does not move for a predetermined time, stops the power supply, so that power waste may be reduced.

The power supply circuit 260 may resume the supply of power if a predetermined key provided at the remote control device 200 is operated.

The memory 270 may store various kinds of programs and application data required to control or operate the remote control device 200.

If the remote control device 200 transmits/receives signals wirelessly through the display device 100 and the RF circuit 221, the remote control device 200 and the display device 100 transmits/receives signals through a predetermined frequency band.

The controller 280 of the remote control device 200 may store, in the memory 270, information on a frequency band for transmitting/receiving signals to/from the display device 100 paired with the remote control device 200 and refer to it.

The controller 280 controls general matters relating to the control of the remote control device 200. The controller 280 may transmit a signal corresponding to a predetermined key operation of the user input interface 230 or a signal corresponding to the movement of the remote control device 200 sensed by the sensor 240 to the display device 100 through the wireless communication interface 220.

In addition, the microphone 290 of the remote control device 200 may acquire voice.

A plurality of microphones 290 may be provided.

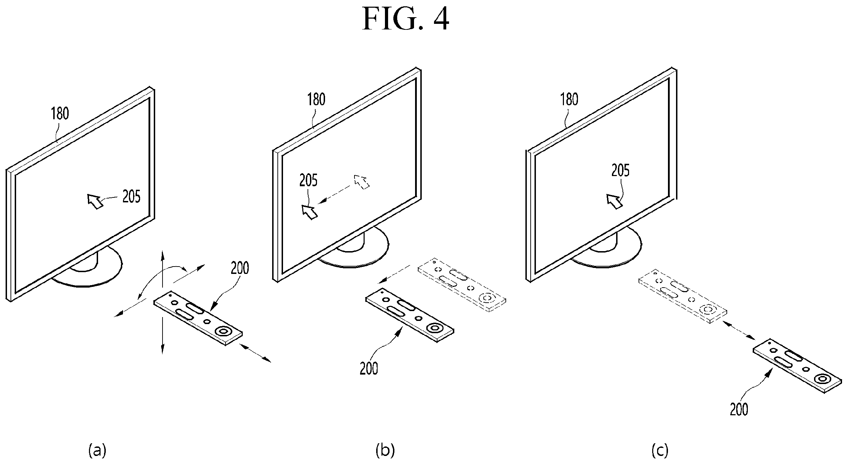

Next, Fig. 4 is described.

Fig. 4 is a view illustrating an example of utilizing a remote control device according to an embodiment of the present disclosure.

Fig. 4(a) illustrates that a pointer 205 corresponding to the remote control device 200 is displayed on the display 180.

A user may move or rotate the remote control device 200 vertically or horizontally. The pointer 205 displayed on the display 180 of the display device 100 corresponds to a movement of the remote control device 200. Since the corresponding pointer 205 is moved and displayed according to a movement on a 3D space as show in the drawing, the remote control device 200 may be referred to as a spatial remote control device.

Fig. 4(b) illustrates that if a user moves the remote control device 200, the pointer 205 displayed on the display 180 of the display device 100 is moved to the left according to the movement of the remote control device 200.

Information on a movement of the remote control device 200 detected through a sensor of the remote control device 200 is transmitted to the display device 100. The display device 100 may calculate the coordinates of the pointer 205 from the information on the movement of the remote control device 200. The display device 100 may display the pointer 205 to match the calculated coordinates.

Fig. 4(c) illustrates that while a specific button in the remote control device 200 is pressed, a user moves the remote control device 200 away from the display 180. Thus, a selected region in the display 180 corresponding to the pointer 205 may be zoomed in and displayed in an enlarged size.

On the other hand, if a user moves the remote control device 200 close to the display 180, a selection area in the display 180 corresponding to the pointer 205 may be zoomed out and displayed in a reduced size.

On the other hand, if the remote control device 200 is moved away from the display 180, a selection area may be zoomed out and if the remote control device 200 is moved closer to the display 180, a selection area may be zoomed in.

Additionally, if a specific button in the remote control device 200 is pressed, recognition of a vertical or horizontal movement may be excluded. In other words, if the remote control device 200 is moved away from or closer to the display 180, the up, down, left, or right movement may not be recognized and only the back and forth movement may be recognized. While a specific button in the remote control device 200 is not pressed, only the pointer 205 is moved according to the up, down, left or right movement of the remote control device 200.

Moreover, the moving speed or moving direction of the pointer 205 may correspond to the moving speed or moving direction of the remote control device 200.

Furthermore, a pointer in this specification means an object displayed on the display 180 in response to an operation of the remote control device 200. Therefore, in addition to the arrow form displayed as the pointer 205 in the drawing, various forms of objects are possible. For example, the above concept includes a point, a cursor, a prompt, and a thick outline. Then, the pointer 205 may be displayed in correspondence to one point of a horizontal axis and a vertical axis on the display 180 and also may be displayed in correspondence to a plurality of points such as a line and a surface.

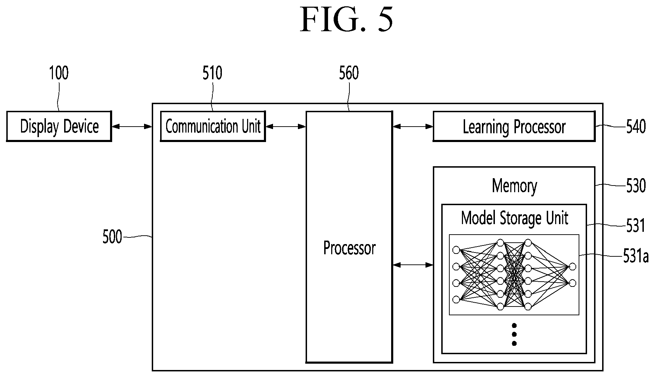

FIG. 5 shows an Artificial Intelligence (AI) server according to an embodiment of the present disclosure.

Referring to FIG. 5, the Al server 500 may mean a device that trains an artificial neural network using a machine learning algorithm or uses a trained artificial neural network.

The Al server 500 may be composed of a plurality of servers to perform distributed processing, and may be defined as a 5G network.

The Al server 500 may be included as part of the configuration of the Al device 100 to perform at least part of Al processing together.

The Al server 500 may include a communication unit 510, a memory 530, a learning processor 540, and a processor 560.

The communication unit 510 may transmit and receive data to and from external devices such as the display device 100.

The memory 530 may include a model storage unit 531.

The model storage unit 531 may store a model being trained or a trained model (or artificial neural network, 531a) through the learning processor 540.

The learning processor 540 may train the artificial neural network 531a using training data. The learning model may be used while mounted on the Al server 500 of the artificial neural network, or may be mounted and used on an external device such as the display device 100.

The learning model may be implemented in hardware, software, or a combination of hardware and software. When part or all of the learning model is implemented in software, one or more instructions constituting the learning model may be stored in the memory 530.

The processor 560 may infer a result value for new input data using the learning model, and generate a response or control command based on the inferred result value.

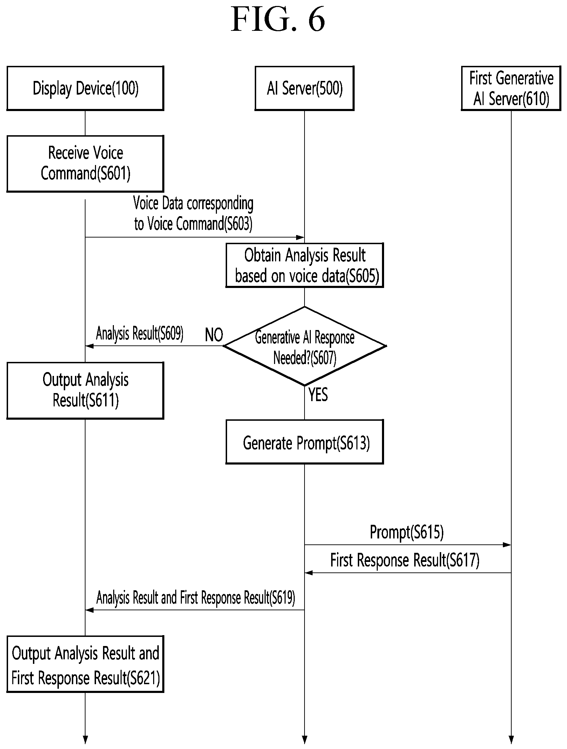

FIG. 6 is a ladder diagram for explaining an operation method of an Al system according to an embodiment of the present disclosure.

Referring to FIG. 6, the Al system may include a display device 100, an Al server 500, and a first generative Al server 610.

The Al server 500 may be a Natural Language Processing (NLP) server.

The controller 170 of the display device 100 may receive a voice command (S601).

In one embodiment, the controller 170 may receive a voice command uttered by a user through a microphone (not shown).

The controller 170 may receive a voice command from the remote control device 200. The remote control device 200 may receive a voice command uttered by a user and transmit it to the display device 100.

The controller 170 of the display device 100 may transmit voice data corresponding to the voice command to the Al server 500 through the network interface 133 (S603).

The processor 560 of the Al server 500 may obtain an analysis result of the voice command based on the received voice data (S605).

In one embodiment, the processor 560 may convert voice data into text data using a Speech To Text (STT) engine stored in the memory 530.

In another embodiment, the processor 560 may transmit voice data to an STT server and receive converted text data from the STT server.

The processor 560 may obtain an analysis result of the text data using a Natural Language Processing (NLP) engine on the converted text data.

The analysis result may include an intention analysis result regarding the intention of the voice command and a search result for the intention analysis result.

For example, if the voice command is <Tell me the plot of A>, the intention analysis result is a request to tell the plot of drama A, and the search result may be search content about the plot of drama A.

The processor 560 of the Al server 500 may determine whether a response from generative Al is needed based on the analysis result of the voice command (S607).

In one embodiment, the processor 560 may determine whether a response from generative Al is needed based on the intention analysis result of the voice command.

The processor 560 may determine that a response from generative Al is not needed when the intention analysis result of the voice command is an intention for controlling functions of the display device 100.

The processor 560 may determine that a response from generative Al is needed when the intention analysis result of the voice command is not an intention for controlling functions of the display device 100.

When the intention analysis result of the voice command is not an intention for controlling functions of the display device 100, it may be an intention for content search.

For example, the processor 560 may determine that a response from generative Al is not needed when the intention of the voice command is function control of the display device 100, such as screen brightness or volume control. This is because the display device 100 can solve it on its own without the help of generative AI.

The processor 560 may determine that a response from generative Al is needed when the intention of the voice command is content search on the display device 100 or travel schedule search for a specific region. This is because it is a function that is difficult for the display device 100 to solve on its own without the help of generative AI.

When the processor 560 of the Al server 500 determines that a generative Al response is not needed, it may transmit the analysis result to the display device 100 through the communication unit 510 (S609).

The processor 560 may transmit the intention analysis result and a search result corresponding to the intention analysis result to the display device 100 through the communication unit 510.

The processor 560 may transmit only the search result corresponding to the intention analysis result to the display device 100 through the communication unit 510.

The controller 170 of the display device 100 may output the received analysis result (S611).

The controller 170 may display the search result included in the analysis result on the display 180.

When the processor 560 of the Al server 500 determines that a response from generative Al is needed, it may generate a prompt for the response from generative Al (S613).

The processor 560 may generate a prompt for obtaining a response result from a generative Al model provided in the generative Al server.

The generative Al model may be a model that generates content in response to a command using deep learning or machine learning.

The prompt may be a text command input to the generative Al model.

The prompt may be a command for causing a natural language generation Al model to generate natural language.

The processor 560 may generate a prompt based on the intention analysis result of the voice command.

The processor 560 may generate a prompt requesting content by combining keywords included in the intention analysis result of the voice command.

Meanwhile, when the processor 560 determines that a response from generative Al is needed, it may determine a display format for displaying the analysis result and the first response result.

The display format may be a format indicating one or more of the location, size, and arrangement of areas to display the analysis result of the Al server 500 and the response result.

The processor 560 may determine any one of a plurality of display formats according to the type of analysis result and the type of response result, and may transmit information about the determined display format to the display device 100.

Here, the type is the type of content, which may be any one of text, image, video, and audio.

The processor 560 of the Al server 500 may transmit the prompt to the first generative Al server 610 through the communication unit 510 (S615), and may receive a first response result from the first generative Al server 610 (S617).

In one embodiment, the first generative Al server 610 may be a server that provides search results for content.

In another embodiment, the first generative Al server 610 may be a server equipped with a natural language generation Al model that outputs natural language.

The natural language generation Al model may generate a first response result in response to the received prompt.

The natural language generation Al model may be a model trained using deep learning architectures such as recurrent neural networks (RNN) and transformation models using attention mechanisms through large-scale text data.

Data for training the natural language generation Al model may be collected from the web or various text sources.

The natural language generation Al model may generate one or more sentences containing content corresponding to the intention analysis result by taking the received prompt as input.

The first generative Al server 610 may obtain the generated one or more sentences as a first response result, and transmit the obtained first response result to the Al server 500.

The processor 560 of the Al server 500 may transmit the analysis result of the voice command and the first response result to the display device 100 through the communication unit 510 (S619).

In one embodiment, the processor 560 may sequentially transmit the analysis result and the first response result to the display device 100 through the communication unit 510.

That is, the processor 560 may first transmit the analysis result to the display device 100, and then later transmit the first response result to the display device 100. This is because the response time of the first generative Al server 610 may be needed.

In another embodiment, the processor 560 may simultaneously transmit the analysis result and the first response result to the display device 100 through the communication unit 510.

Meanwhile, the processor 560 may filter some information from the analysis result and the first response result, and transmit the filtered information to the display device 100. The filtered partial information may include information of a sexual nature or information such as profanity.

The controller 170 of the display device 100 may output the received analysis result and the first response result (S621).

The controller 170 may display the analysis result and the first response result on the display 180.

The controller 170 may display the analysis result and the first response result on the display 180 according to the display format received from the Al server 500.

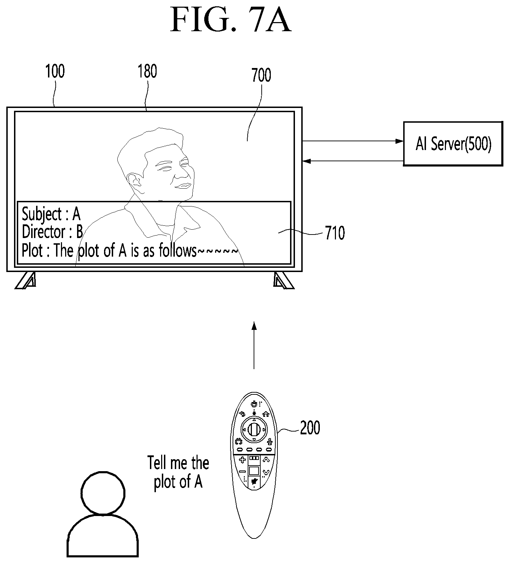

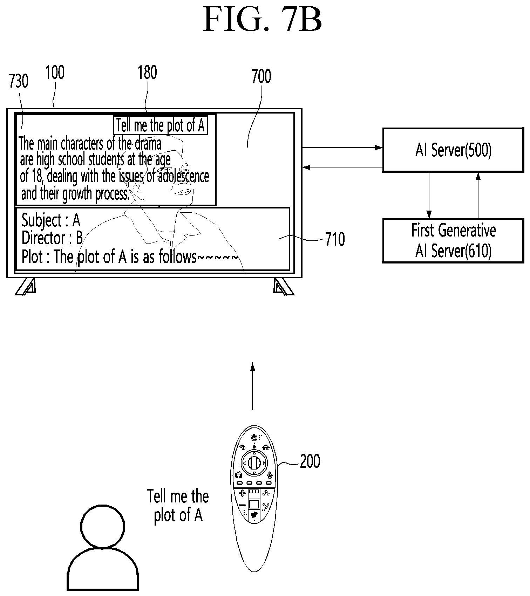

FIG. 7a is a diagram explaining a process of providing an analysis result of an Al server based on a user's voice command according to the prior art, and FIGS. 7b to 7d are diagrams explaining a process of providing an analysis result of an Al server and a first response result of a first generative Al server based on a user's voice command according to an embodiment of the present disclosure.

Referring to FIG. 7a, the display device 100 is playing content video 700.

The user may press the microphone button provided on the remote control device 200 and utter the voice command <Tell me the plot of A>.

The remote control device 200 may transmit the received voice command to the display device 100.

The display device 100 may transmit voice data corresponding to the voice command to the Al server 500, and receive a first plot search result 710 for the plot of content A included in the analysis result of the voice command from the Al server 500.

The display device 100 may display the first plot search result 710 on the display 180.

The display device 100 may display the first plot search result 710 by overlapping it on the content video 700.

Referring to FIG. 7b, the display device 100 is playing content video 700.

The user may press the microphone button provided on the remote control device 200 and utter the voice command <Tell me the plot of A>.

The remote control device 200 may transmit the received voice command to the display device 100.

The display device 100 may transmit voice data corresponding to the voice command to the Al server 500, and receive a first plot search result 710 for the plot of content A included in the analysis result of the voice command from the Al server 500.

When the Al server 500 determines that the intention analysis result of the voice command relates to content search, it may generate a prompt requesting a plot search for content having the name A.

The Al server 500 may transmit a prompt requesting a plot search for content having the name A to the first generative Al server 610.

The first generative Al server 610 may input the received prompt to a natural language generation Al model to generate a second plot search result including the plot of content A.

The first generative Al server 610 may transmit the second plot search result to the Al server 500, and the Al server 500 may transmit the second plot search result 730 to the display device 100.

The display device 100 may display the first plot search result 710 and the second plot search result 730 on the display 180.

The display device 100 may display the plot search result 710 by overlapping it on the content video 700.

The display device 100 may display the first plot search result 710 and the second plot search result 730 on the display 180 according to the display format received from the Al server 500. Here, the display format may be a format that displays the first plot search result 710 at the bottom of the display screen and displays the second plot search result 730 at the top of the display screen.

As such, according to an embodiment of the present disclosure, the NLP service of the manufacturer of the display device 100 and an external server service providing information received from external generative Al can be utilized according to the user's utterance intention.

User experience can be improved as various response results matching the user's utterance intention are provided.

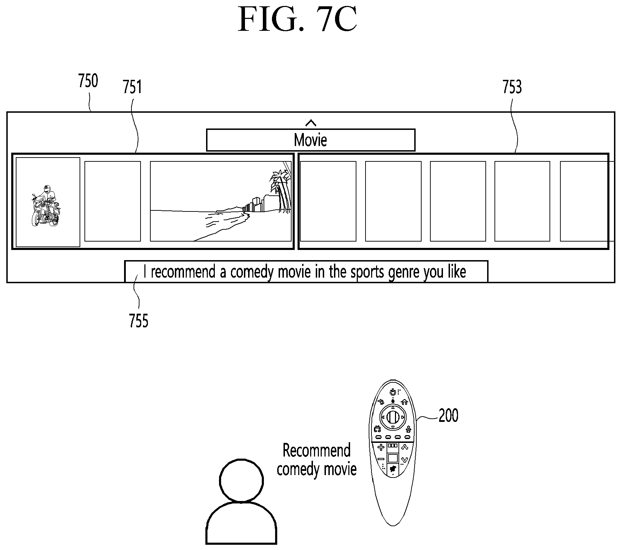

FIG. 7c is an example where the user utters the voice command <Recommend comedy movie> on the home screen or content provision screen.

The display device 100 may display the first search result 751 for comedy movies received from the Al server 500 and the second search result 753 for comedy movies received from the first generative Al server 610 on the screen 750 of the display 180.

The Al server 500 may generate a prompt by reflecting the intention analysis result of the voice command (comedy movie recommendation) and the user's preference information.

The user's preference information may include one or more of preferred genre, preferred actor, and preferred director. The user's preference information may be collected by the display device 100 transmitting it to the Al server 500 in advance.

For example, the prompt may include a command to search for comedy movies in the sports genre.

The Al server 500 may transmit the generated prompt to the first generative Al server 610, and the first generative Al server 610 may receive the second search result 753 for comedy movies in the sports genre.

Each of the first search result 751 and the second search result 753 may include thumbnail images of one or more comedy movies.

The screen 750 may further include a feedback phrase 755 for the second search result 753. The Al server 500 may transmit the second search result 753 and the feedback phrase 755 explaining the search intention of the second search result 753 to the display device 100 together.

Meanwhile, the display device 100 may display the first search result 751 and the second search result 753 in half view according to the display format received from the Al server 500, and display the feedback phrase 755 at the bottom of the screen 750.

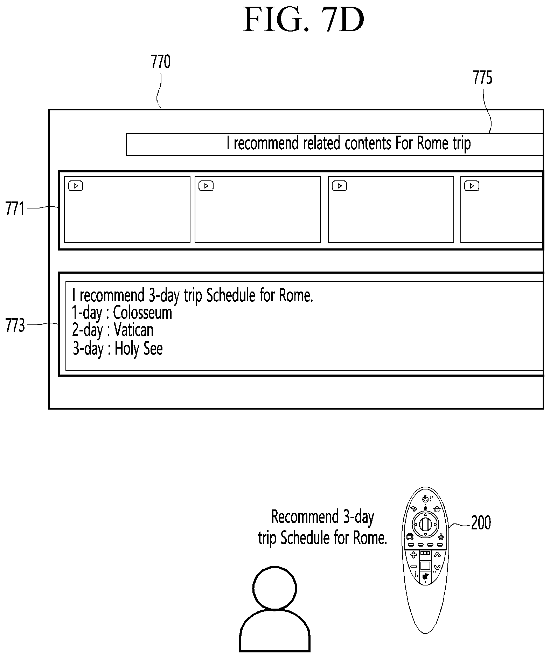

FIG. 7d is an example where the user utters the voice command <Recommend 3-day trip Schedule for Rome> on the home screen or content provision screen.

The display device 100 may display the third search result 771 for tourist destinations in Rome received from the Al server 500 and the fourth search result 773 for tourist destinations in Rome received from the first generative Al server 610 on the screen 750 of the display 180.

The third search result 771 may include a plurality of videos containing information about tourist destinations in Rome or URL addresses to each of the plurality of videos.

The Al server 500 may generate a prompt by reflecting the intention analysis result of the voice command (Rome tourist destination recommendation) and the third search result 771. Here, the prompt may include a command to recommend a travel itinerary using the plurality of videos about tourist destinations in Rome.

The Al server 500 may transmit the generated prompt to the first generative Al server 610, and may receive a fourth search result 773 indicating a 3-day Rome travel itinerary from the first generative Al server 610.

The fourth search result 773 may include travel destination schedule information for 3 days.

The screen 770 may further include a feedback phrase 775 for the fourth search result 773.

Meanwhile, the display device 100 may display the third search result 771 and the fourth search result 773 in horizontal full view according to the display format received from the Al server 500, and display the feedback phrase 775 at the top of the screen 770.

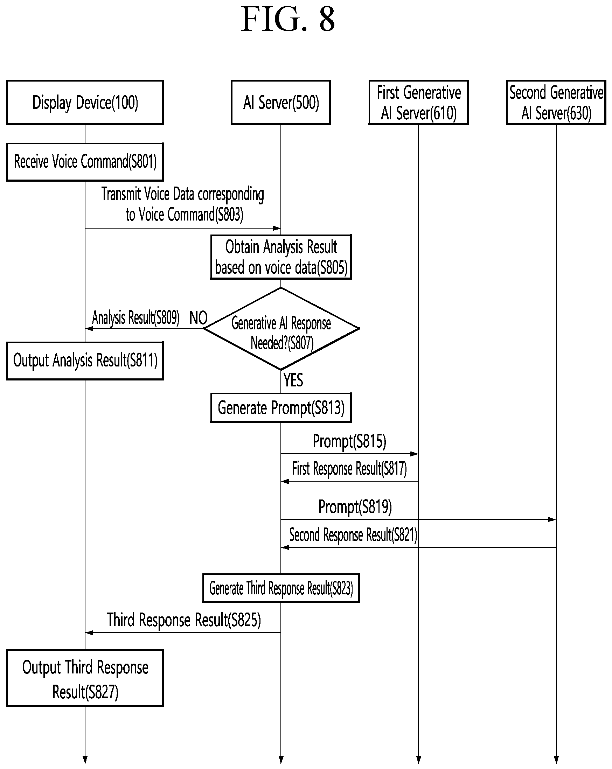

FIG. 8 is a ladder diagram for explaining an operation method of an Al system according to another embodiment of the present disclosure.

Referring to FIG. 8, the Al system may include a display device 100, an Al server 500, a first generative Al server 610, and a second generative Al server 630.

The Al server 500 may be a Natural Language Processing (NLP) server.

The controller 170 of the display device 100 may receive a voice command (S801).

In one embodiment, the controller 170 may receive a voice command uttered by a user through a microphone (not shown).

The controller 170 may receive a voice command from the remote control device 200. The remote control device 200 may receive a voice command uttered by a user and transmit it to the display device 100.

The controller 170 of the display device 100 may transmit voice data corresponding to the voice command to the Al server 500 through the network interface 133 (S803).

The processor 560 of the Al server 500 may obtain an analysis result of the voice command based on the received voice data (S805).

In one embodiment, the processor 560 may convert voice data into text data using a Speech To Text (STT) engine stored in the memory 530.

In another embodiment, the processor 560 may transmit voice data to an STT server and receive converted text data from the STT server.

The processor 560 may obtain an analysis result of the text data using a Natural Language Processing (NLP) engine on the converted text data.

The analysis result may include an intention analysis result regarding the intention of the voice command and a search result for the intention analysis result.

The processor 560 of the Al server 500 may determine whether a response from generative Al is needed based on the analysis result of the voice command (S807).

In one embodiment, the processor 560 may determine whether a response from generative Al is needed based on the intention analysis result of the voice command.

The processor 560 may determine that a response from generative Al is not needed when the intention analysis result of the voice command is an intention for controlling functions of the display device 100.

The processor 560 may determine that a response from generative Al is needed when the intention analysis result of the voice command is not an intention for controlling functions of the display device 100.

When the intention analysis result of the voice command is not an intention for controlling functions of the display device 100, it may be an intention for content search.

For example, the processor 560 may determine that a response from generative Al is not needed when the intention of the voice command is function control of the display device 100, such as screen brightness or volume control. This is because the display device 100 can solve it on its own without the help of generative AI.

The processor 560 may determine that a response from generative Al is needed when the intention of the voice command is content search on the display device 100 or travel schedule search for a specific region. This is because it is a function that is difficult for the display device 100 to solve on its own without the help of generative AI.

When the processor 560 of the Al server 500 determines that a generative Al response is not needed, it may transmit the analysis result to the display device 100 through the communication unit 510 (S809).

The processor 560 may transmit the intention analysis result and a search result corresponding to the intention analysis result to the display device 100 through the communication unit 510.

The processor 560 may transmit only the search result corresponding to the intention analysis result to the display device 100 through the communication unit 510.

The controller 170 of the display device 100 may output the received analysis result (S811).

The controller 170 may display the search result included in the analysis result on the display 180.

When the processor 560 of the Al server 500 determines that a response from generative Al is needed, it may generate a prompt for a response from the first generative Al server 610 (S813).

The processor 560 may generate a prompt for obtaining a response result from a generative Al model provided in the first generative Al server 610.

The generative Al model may be a model that generates content in response to a command using deep learning or machine learning. The command may include one or more of text or image.

The processor 560 may generate a prompt based on the intention analysis result of the voice command.

The processor 560 may generate a prompt requesting content by combining keywords included in the intention analysis result of the voice command.

The processor 560 of the Al server 500 may transmit the prompt to the first generative Al server 610 through the communication unit 510 (S815), and may receive a first response result from the first generative Al server 610 (S817).

In one embodiment, the first generative Al server 610 may be a server that provides search results for content.

In another embodiment, the first generative Al server 610 may be a server equipped with a natural language generation Al model that outputs natural language.

The natural language generation Al model may generate a first response result in response to the received prompt.

The natural language generation Al model may be a model trained using deep learning architectures such as recurrent neural networks (RNN) and transformation models using attention mechanisms through large-scale text data.

Data for training the natural language generation Al model may be collected from the web or various text sources.

The natural language generation Al model may generate one or more sentences containing content corresponding to the intention analysis result by taking the received prompt as input.

The first generative Al server 610 may obtain the generated one or more sentences as a first response result, and transmit the obtained first response result to the Al server 500.

The processor 560 of the Al server 500 may transmit the prompt to the second generative Al server 630 through the communication unit 510 (S819), and may receive a second response result from the second generative Al server 630 (S821).

That is, the processor 560 may transmit the same prompt to the first generative Al server 610 and the second generative Al server 630.

The second generative Al server 630 may be a server that provides search results for content.

In another embodiment, the second generative Al server 630 may be a server equipped with a natural language generation Al model that outputs natural language.

The second generative Al server 630 may be a server equipped with the same type of generative Al model as the first generative Al server 610.

The second generative Al server 630 may obtain one or more sentences as a second response result for the prompt, and transmit the obtained second response result to the Al server 500.

The processor 560 of the Al server 500 may generate a third response result based on the first response result and the second response result (S823).

In one embodiment, the processor 560 may generate a third response result by combining the first response result and the second response result.

In another embodiment, the processor 560 may obtain the remaining content excluding duplicated parts in the first response result and the second response result as the third response result.

The processor 560 of the Al server 500 may transmit the third response result to the display device 100 through the communication unit 510 (S825).

In one embodiment, the processor 560 may sequentially transmit the analysis result and the third response result to the display device 100 through the communication unit 510. That is, the processor 560 may first transmit the analysis result to the display device 100, and then later transmit the third response result to the display device 100. This is because the response time of the first generative Al server 610 and the second generative Al server 630 may be needed.

In another embodiment, the processor 560 may simultaneously transmit the analysis result and the third response result to the display device 100 through the communication unit 510.

Meanwhile, when the processor 560 determines that a response from generative Al is needed, it may determine a display format for displaying the analysis result and the third response result.

The display format may be a format indicating the location, size, arrangement, etc. of areas to display the analysis result of the Al server 500 and the third response result.

The processor 560 may determine any one of a plurality of display formats according to the type of analysis result and the type of third response result, and may transmit information about the determined display format to the display device 100.

Here, the type is the type of content included in the analysis result, which may be any one of text, image, video, and audio.

The controller 170 of the display device 100 may output the received third response result (S827).

The controller 170 may display the analysis result and the third response result on the display 180.

The controller 170 may display the analysis result and the third response result on the display 180 according to the display format received from the Al server 500.

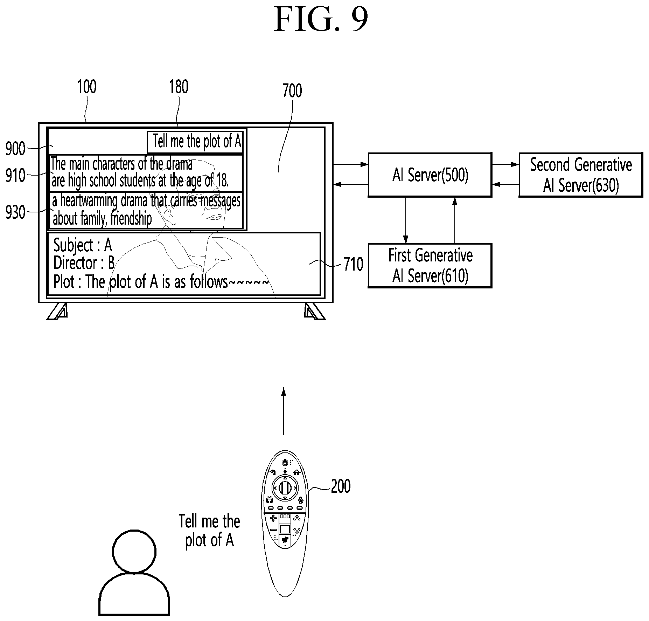

FIG. 9 is a diagram explaining a process of providing an analysis result of an Al server and first and second response results provided from first and second generative Al servers, respectively, based on a user's voice command according to an embodiment of the present disclosure.

Referring to FIG. 9, the display device 100 is playing content video 700.

The user may press the microphone button provided on the remote control device 200 and utter the voice command <Tell me the plot of A>.

The remote control device 200 may transmit the received voice command to the display device 100.

The display device 100 may transmit voice data corresponding to the voice command to the Al server 500, and receive a first plot search result 710 for the plot of content A included in the analysis result of the voice command from the Al server 500.

When the Al server 500 determines that the intention analysis result of the voice command relates to content search, it may generate a prompt requesting a plot search for content having the name A.

The Al server 500 may transmit a prompt requesting a plot search for content having the name A to each of the first generative Al server 610 and the second generative Al server 630.

Each of the first generative Al server 610 and the second generative Al server 630 may be servers operated by different operating entities.

The first generative Al server 610 may input the received prompt to a natural language generation Al model to generate a second plot search result 910 including the plot of content A.

The first generative Al server 610 may transmit the second plot search result 910 to the Al server 500.

The second generative Al server 630 may input the received prompt to a natural language generation Al model to generate a third plot search result 930 including the plot of content A.

The second generative Al server 630 may transmit the third plot search result 930 to the Al server 500.

The Al server 500 may transmit the second plot search result 910 and the third plot search result 930 to the display device 100.

The display device 100 may display the first plot search result 710, the second plot search result 910, and the third plot search result 930 on the display 180.

The generative Al search result 900 including the second plot search result 910 and the third plot search result 930 may be displayed above the first plot search result 710 according to the display format.

As such, according to an embodiment of the present disclosure, an NLP service of the manufacturer of the display device 100 and an external server service providing information received from a plurality of external generative Al servers can also be utilized according to the user's utterance intention.

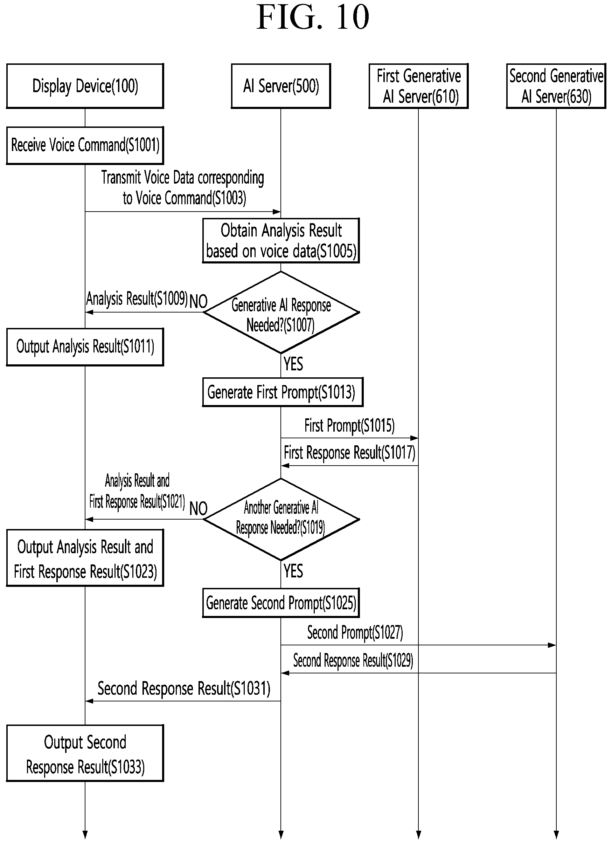

FIG. 10 is a ladder diagram for explaining an operation method of an Al system according to another embodiment of the present disclosure.

Referring to FIG. 10, the Al system may include a display device 100, an Al server 500, a first generative Al server 610, and a second generative Al server 630.

The Al server 500 may be a Natural Language Processing (NLP) server.

The controller 170 of the display device 100 may receive a voice command (S1001).

In one embodiment, the controller 170 may receive a voice command uttered by a user through a microphone (not shown).

The controller 170 may receive a voice command from the remote control device 200. The remote control device 200 may receive a voice command uttered by a user and transmit it to the display device 100.

The controller 170 of the display device 100 may transmit voice data corresponding to the voice command to the Al server 500 through the network interface 133 (S1003).

The processor 560 of the Al server 500 may obtain an analysis result of the voice command based on the received voice data (S1005).

In one embodiment, the processor 560 may convert voice data into text data using a Speech To Text (STT) engine stored in the memory 530.

In another embodiment, the processor 560 may transmit voice data to an STT server and receive converted text data from the STT server.

The processor 560 may obtain an analysis result of the text data using a Natural Language Processing (NLP) engine on the converted text data.

The analysis result may include an intention analysis result regarding the intention of the voice command and a search result for the intention analysis result.

The processor 560 of the Al server 500 may determine whether a response from generative Al is needed based on the analysis result of the voice command (S1007).

In one embodiment, the processor 560 may determine whether a response from generative Al is needed based on the intention analysis result of the voice command.

The processor 560 may determine that a response from generative Al is not needed when the intention analysis result of the voice command is an intention for controlling functions of the display device 100.

The processor 560 may determine that a response from generative Al is needed when the intention analysis result of the voice command is not an intention for controlling functions of the display device 100.

When the intention analysis result of the voice command is not an intention for controlling functions of the display device 100, it may be an intention for content search.

For example, the processor 560 may determine that a response from generative Al is not needed when the intention of the voice command is function control of the display device 100, such as screen brightness or volume control. This is because the display device 100 can solve it on its own without the help of generative AI.

The processor 560 may determine that a response from generative Al is needed when the intention of the voice command is content search on the display device 100 or travel schedule search for a specific region. This is because it is a function that is difficult for the display device 100 to solve on its own without the help of generative AI.

When the processor 560 of the Al server 500 determines that a generative Al response is not needed, it may transmit the analysis result to the display device 100 through the communication unit 510 (S1009).

The processor 560 may transmit the intention analysis result and a search result corresponding to the intention analysis result to the display device 100 through the communication unit 510.

The processor 560 may transmit only the search result corresponding to the intention analysis result to the display device 100 through the communication unit 510.

The controller 170 of the display device 100 may output the received analysis result (S1011).

The controller 170 may display the search result included in the analysis result on the display 180.

When the processor 560 of the Al server 500 determines that a response from generative Al is needed, it may generate a first prompt for a response from the first generative Al server 610 (S1013).

The processor 560 may generate a first prompt for obtaining a response result from a generative Al model provided in the first generative Al server 610.

The generative Al model may be a model that generates content in response to a command using deep learning or machine learning. The command may include one or more of text or image.

The processor 560 may generate a first prompt based on the intention analysis result of the voice command.

The processor 560 may generate a first prompt requesting content by combining keywords included in the intention analysis result of the voice command.

The processor 560 of the Al server 500 may transmit the prompt to the first generative Al server 610 through the communication unit 510 (S1015), and may receive a first response result from the first generative Al server 610 (S1017).

In one embodiment, the first generative Al server 610 may be a server that provides search results for content.

In another embodiment, the first generative Al server 610 may be a server equipped with a natural language generation Al model that outputs natural language.

The natural language generation Al model may generate a first response result in response to the received prompt.

The natural language generation Al model may be a model trained using deep learning architectures such as recurrent neural networks (RNN) and transformation models using attention mechanisms through large-scale text data.

Data for training the natural language generation Al model may be collected from the web or various text sources.

The natural language generation Al model may generate one or more sentences containing content corresponding to the intention analysis result by taking the received prompt as input.

The first generative Al server 610 may obtain the generated one or more sentences as a first response result, and transmit the obtained first response result to the Al server 500.

The processor 560 of the Al server 500 may determine whether a response from another generative Al is needed based on the received first response result (S1019).

In one embodiment, the processor 560 may determine that a response from another generative Al is needed when the first response result includes only a specific type of information. For example, the processor 560 may determine that a response from another generative Al is needed to obtain image information when the first response result includes only text information.

In another embodiment, the processor 560 may determine that a response from another generative Al is needed when an additional voice command from the user is received after providing the first response result to the display device 100.

The processor 560 may determine that a response from another generative Al is needed when the first generative Al server 610 cannot provide a response to the analysis result of the additional voice command.

When the processor 560 of the Al server 500 determines that a response from another generative Al is not needed, it may transmit the analysis result of the voice command and the first response result to the display device 100 through the communication unit 510 (S1021).

The controller 170 of the display device 100 may output the received analysis result and the first response result (S1023).

Meanwhile, when the processor 560 of the Al server 500 determines that a response from another generative Al is needed, it may generate a second prompt based on the first response result (S1025).

The processor 560 may generate a second prompt by combining the first response result and the analysis result of the user's additional voice command.

For example, the second prompt may include a command requesting an analysis result of an image indicating the first response result, which is an image, and the analysis result of the additional voice command.

The processor 560 of the Al server 500 may transmit the second prompt to the second generative Al server 630 through the communication unit 510 (S1027), and may receive a second response result from the second generative Al server 630 (S1029).

The second generative Al server 630 may be a server equipped with a generative Al model that provides image analysis results.

The second generative Al server 630 may obtain one or more sentences as a second response result for the prompt, and transmit the obtained second response result to the Al server 500.

The processor 560 of the Al server 500 may transmit the second response result to the display device 100 through the communication unit 510 (S1031).

The controller 170 of the display device 100 may output the received second response result (S827).

The controller 170 may display the second response result on the display 180.

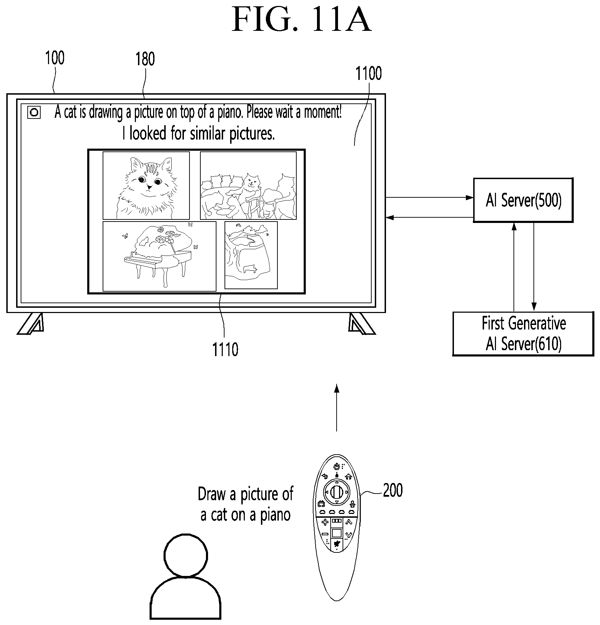

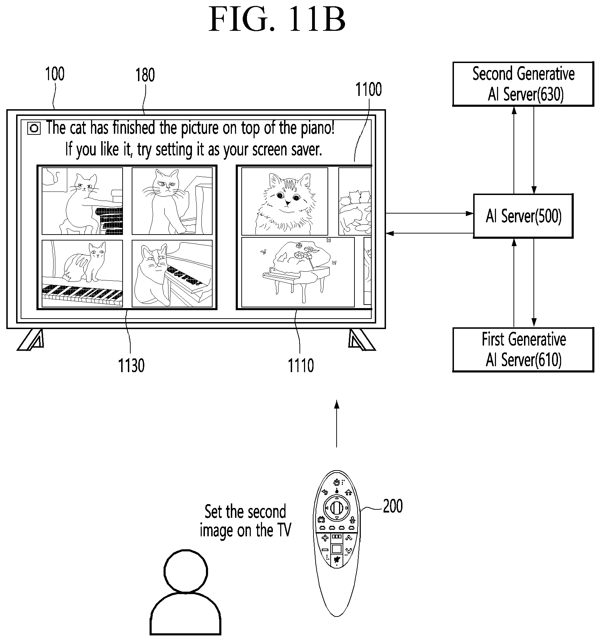

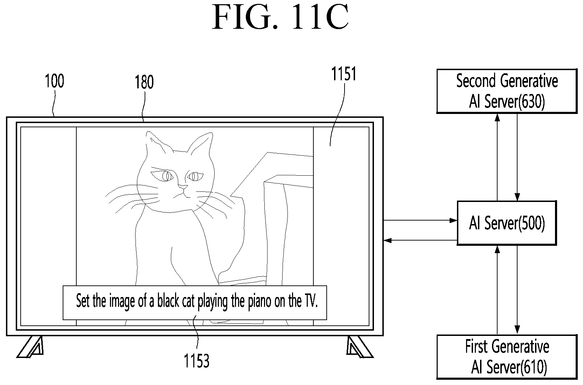

FIGS. 11a to 11c are diagrams explaining a process of providing a response result of another generative Al when a response result of another generative Al is needed according to an embodiment of the present disclosure.

FIGS. 11a to 11c show examples of the embodiment of FIG. 10.

Referring to FIG. 11a, the user utters the first voice command <Draw a picture of a cat on a piano> to the remote control device 200.

The remote control device 200 transmits the first voice command to the display device 100, and the display device 100 may transmit first voice data corresponding to the first voice command to the Al server 500.

The Al server 500 may convert the first voice data into first text data and obtain an analysis result of the converted first text data.

The Al server 500 may transmit a plurality of images indicating search results for the first voice command to the display device 100.

The display device 100 may display on the screen 1100 a plurality of search images 1110 and a text phrase indicating that it is waiting for the first response result from the first generative Al server 610.

The Al server 500 may generate a first prompt based on the analysis result of the first voice command, and transmit the generated first prompt to the first generative Al server 610. The first prompt may include a command to draw a picture of a cat on a piano.

The first generative Al server 610 may generate a plurality of response images representing <a cat on a piano> according to the first prompt, and transmit the generated plurality of response images (first response result) to the Al server 500.

The display device 100 may display on the screen 1100 the plurality of search images 1110 and the plurality of response images 1130.

After this, the user may additionally utter the second voice command <Set the second image on the TV> to the remote control device 200.

The remote control device 200 may transmit the second voice command to the display device 100.

The display device 100 may transmit second voice data corresponding to the second voice command to the Al server 500.

The Al server 500 may determine that a response from another generative Al is needed based on the analysis result of the second voice data. The analysis result of the second voice data may include an intention to generate a title for the image.

The Al server 500 may generate a second prompt based on the analysis result of the second voice data (setting the title of the second image) and the first response result (plurality of response images). The second prompt may include a command to set the second image included in the plurality of response images and the title of that image.

The Al server 500 may transmit the second prompt to the second generative Al server 630, and the second generative Al server 630 may generate a title for the image based on the second prompt.

The second generative Al server 630 may transmit the generated image title to the Al server 500, and the Al server 500 may transmit the image title to the display device 100.

The display device 100 may display on the display 180 the second image 1151 and text 1153 including the image title (black cat playing piano).

As such, according to an embodiment of the present disclosure, various services can be provided to users by combining response results from external generative Al servers for voice commands uttered by users.

According to an embodiment of the present invention, the above-described method can be implemented as code readable by a processor on a medium on which a program is recorded. Examples of processor-readable media include ROM, RAM, CD-ROM, magnetic tape, floppy disk, optical data storage device, etc.

The display device described above can be configured by selectively combining all or part of each embodiment so that various modifications can be made, rather than being limitedly applied to the configuration and method of the described embodiments.

## Claims

1. An artificial intelligence device comprising:
a communication unit configured to communicate with an electronic device and one or more generative Artificial Intelligence (AI) servers; and
a processor configured to: receive a voice command uttered by a user from the electronic device, obtain an analysis result of the received voice command, generate a prompt based on the analysis result when it is determined that a response from the one or more generative Al servers is needed based on the obtained analysis result, transmit the generated prompt to the one or more generative Al servers, receive a response result corresponding to the prompt from the one or more generative Al servers, and transmit the analysis result and the response result to the electronic device.

2. The artificial intelligence device of claim 1, wherein the processor is configured to first transmit the analysis result to the electronic device, and then later transmit the response result to the electronic device.

3. The artificial intelligence device of claim 1, wherein the processor is configured to determine that a response from the one or more generative Al servers is not needed when the intention analysis result of the voice command is an intention for controlling functions of the display device, and determine that a response from the one or more generative Al servers is needed when the intention analysis result of the voice command is not an intention for controlling functions of the display device.

4. The artificial intelligence device of claim 1, wherein the processor is configured to generate the prompt based on the analysis result and the user's preference information.

5. The artificial intelligence device of claim 1, wherein the analysis result includes an intention analysis result and a search result corresponding to the intention analysis result, and the processor is configured to generate the prompt based on the intention analysis result and the search result.

6. The artificial intelligence device of claim 1, wherein the processor is configured to transmit the prompt to each of a first generative Al server and a second generative Al server, and receive a first response result from the first generative Al server and receive a second response result from the second generative Al server.

7. The artificial intelligence device of claim 6, wherein the processor is configured to generate a third response result based on the analysis result, the first response result, and the second response result, and transmit the generated third response result to the electronic device.

8. The artificial intelligence device of claim 6, wherein the processor is configured to transmit the analysis result, the first response result, and the second response result to the electronic device.

9. The artificial intelligence device of claim 1, wherein the processor is configured to, when it is determined that a response from a first generative Al server is needed based on the obtained analysis result, generate a first prompt based on the analysis result, transmit the generated first prompt to the first generative Al server, receive a first response result from the first generative Al server, and when it is determined that a response from a second generative Al server is needed, generate a second prompt based on the first response result, transmit the second prompt to the second generative Al server, and receive a second response result from the second generative Al server.

10. The artificial intelligence device of claim 9, wherein the processor is configured to receive an additional voice command from the electronic device, and determine whether a response from the second generative Al server is needed based on the analysis result of the additional voice command.

11. The artificial intelligence device of claim 10, wherein the processor is configured to determine that a response from the second generative Al server is needed when the first generative Al server cannot provide a response to the analysis result of the additional voice command based on the analysis result of the additional voice command.

12. The artificial intelligence device of claim 11, wherein the processor is configured to generate the second prompt based on the first response result and the analysis result of the additional voice command.

13. The artificial intelligence device of claim 1, wherein the processor is configured to transmit information about a display format for the analysis result and the response result to the electronic device.

14. The artificial intelligence device of claim 13, wherein the display format is a format including one or more of the location, size, or arrangement of areas to display the analysis result and the response result.

15. A method of operating an artificial intelligence device, the method comprising:
receiving a voice command uttered by a user from an electronic device;
obtaining an analysis result of the received voice command;
generating a prompt based on the analysis result when it is determined that a response from one or more generative Al servers is needed based on the obtained analysis result;
transmitting the generated prompt to the one or more generative Al servers;
receiving a response result corresponding to the prompt from the one or more generative Al servers; and
transmitting the analysis result and the response result to the electronic device.
